# EUROPÄISCHE PATENTSCHRIFT

(11) **EP 3 887 791 B1**
(45) Veröffentlichungstag und Bekanntmachung des Hinweises auf die Patenterteilung: **16.11.2022**
(21) Anmeldenummer: 19809070.6
(22) Anmeldetag: 25.11.2019
(51) Int. Cl.: G01M 5/00, G01M 7/08, G01M 13/027, G01M 17/007

(54) **LASTSIMULATIONSPRÜFSTAND UND VERFAHREN ZU DESSEN BETRIEB**
LOAD SIMULATION TEST STAND AND METHOD FOR OPERATING THE SAME
BANC D'ESSAI À SIMULATION DE CHARGE ET PROCÉDÉ PERMETTANT DE FAIRE FONCTIONNER LEDIT BANC D'ESSAI

(30) Priorität: 30.11.2018 DE 102018009386
(43) Veröffentlichungstag der Anmeldung: 06.10.2021
(73) Patentinhaber: Universität Paderborn, 33098 Paderborn (DE)
(72) Erfinder: JÄKER, Karl-Peter, 59597 Erwitte (DE); TRÄCHTLER, Ansgar, 33102 Paderborn (DE); OLMA, Simon, 33102 Paderborn (DE); KOHLSTEDT, Andreas, 33102 Paderborn (DE); TRAPHÖNER, Phillipp, 33647 Bielefeld (DE)
(74) Vertreter: Cohausz Hannig Borkowski Wißgott
(86) Internationale Anmeldenummer: PCT/EP2019/082452
(87) Internationale Veröffentlichungsnummer: WO 2020/109244

(56) Entgegenhaltungen:
- EP-A1- 2 741 068

## Beschreibung

Die Erfindung betrifft einen Lastsimulationsprüfstand mit wenigstens einem hydraulischen Prüfzylinder, der wenigstens einen mit Hydraulikfluid beaufschlagbaren Zylinderraum, bevorzugt der zwei mit Hydraulikfluid beaufschlagbare und gegeneinander arbeitende Zylinderräume umfasst. Die Erfindung betrifft weiterhin ein Verfahren zum Betrieb eines Lastsimulationsprüfstandes mit wenigstens einem Prüfzylinder, wobei der wenigstens eine Prüfzylinder mit einer zu bewegenden Last verbunden wird, insbesondere also die Last an der Kolbenstange des Prüfzylinders befestigt wird, und wobei mittels eines Druckregelungssystems durch eine zeitlich änderbare Regelung des Fluiddruckes in dem wenigstens einen Zylinderraum des wenigstens einen Prüfzylinders die Last bewegt wird, insbesondere gemäß einer vorgegebenen Zielbewegung.

Lastsimulationsprüfstände und Verfahren zum Betrieb dieser Prüfstände sind im Stand der Technik bekannt. Solche Lastsimulationsprüfstände stellen einen mechatronischen Prüfstand dar zur hochdynamischen Lastsimulation, z. B. zur Untersuchung von Betriebsfestigkeiten bei Fahrzeugachsen.

Lastsimulationsprüfstände im Sinne der Erfindung sind somit bevorzugt solche Prüfstände, mit denen Fahrzeugachsen belastet und deren Reaktion auf die Belastung geprüft werden kann. Lastsimulationsprüfstände können aber auch für andere Anwendungen eingesetzt werden.

Hierfür umfassen Lastsimulationsprüfstände üblicherweise wenigstens einen hydraulischen Prüfzylinder, der vorgesehen ist, um mit der Last verbunden zu werden und diese durch Veränderung des Drucks in dem wenigstens einen beaufschlagbaren Zylinderraum zu bewegen. Hierbei ist es auch bekannt, z. B. mehrere Prüfzylinder als ein Anregungssystem zusammenzufassen. Beispielsweise kann eine Last mittels eines oder mehrerer hydraulischer Hexapoden bewegt werden, wobei jeder hydraulische Hexapode sechs hydraulische Prüfzylinder umfasst. Die Verbindung von Prüfzylinder und Last erfolgt z.B. dadurch, dass die zu bewegende Last direkt oder mittels Adapter an der Kolbenstange des Prüfzylinders befestigt wird.

Solche Prüfzylinder (zum Beispiel EP2741068) haben wenigstens einen Zylinderraum und in bevorzugter Anwendung zwei mit Hydraulikfluid beaufschlagbare und gegeneinander arbeitende Zylinderräume, vorzugsweise mit gleichen Kolbenflächen. Besonders bevorzugt eingesetzte Prüfzylinder sind somit als Gleichlaufzylinder ausgebildet, in denen diese genannte Ausbildung realisiert ist.

Das verfahrensmäßig eingesetzte Druckregelungssystem ist vorgesehen, den Fluiddruck in dem wenigstens einen Zylinderraum, bevorzugt die Drücke in den zwei gegeneinander arbeitenden Zylinderräumen mit zeitlich änderbaren Sollwerten zu regeln und so die Last zu bewegen.

Das Druckregelungssystem kann z.B. eine hydraulische Druckquelle, z.B. eine Pumpe und eine Drucksenke, z.B. einen Tank umfassen. Mittels wenigstens eines umsteuerbaren Ventils, bevorzugt einem Ventil pro Zylinder kann die Fluidbeaufschlagung der jeweiligen Zylinderräume vorgenommen werden, insbesondere dadurch, dass mit einer Umsteuerung ein jeweiliger Zylinderraum wahlweise an die Druckquelle oder -senke angeschlossen wird.

Insbesondere durch eine Druckbeaufschlagung von gegeneinander arbeitenden Zylinderräumen, z. B. in einem Gleichlaufzylinder, ergibt sich effektiv eine Differenzdruckregelung und somit eine Kraftregelung der auf die Last ausgeübten Kräfte.

Herkömmliche Prüfzylinder, die bislang in solchen Lastsimulationsprüfständen zum Einsatz kommen, weisen eine geringe Regel-Bandbreite auf, insbesondere die geringer ist als eine vorgegebene mögliche Bandbreite eines Druckregelungssystems, so dass mit herkömmlichen Prüfzylindern ein zeitlicher Verlauf von auf die Last wirkenden Kräften zur Durchführung einer Lastsimulation nicht in Echtzeit als zeitlich änderbare Druck-Sollwerte vorgegeben werden können.

Gemäß dem bisherigen Stand der Technik wird diese Problematik dadurch umgangen, das Sollwerte, z.B. von Druck oder Kraft oder Weg oder Geschwindigkeit, die zur Bewegung einer Last erzielt werden müssen, iterativ mit dem Regelungssystem eines Lastsimulationsprüfstandes eingelernt werden müssen.

Dabei werden in einer Iterationsschleife die Ansteuersignale für die Regelung des bzw. der Prüfzylinder so lange in Abhängigkeit der messtechnischen Erfassung der tatsächlichen aktuellen Bewegung der Last geändert, bis dass eine gewünschte vorgegebene Zielbewegung genügend gut durch die Iteration angenähert ist. Unter der Zielbewegung können die sich zeitlich ändernden zu erzielenden Werte z.B. für Wege und/oder Geschwindigkeiten oder auch die sich zeitlich ändernde Werte für Drücke oder Kräfte gemeint sein. Eine solche Zielbewegung kann synthetisch vorgegeben werden oder es handelt sich um eine Zielbewegung, die konkret messtechnisch erfasst wurde, z.B. mittels eines Fahrzeugs, das zur Messung über eine Straße gefahren wurde, wobei die auf die Fahrzeugachse einwirkenden Größen, z.B. Kräfte und/oder Positionen oder Positionsänderungen oder Wege oder Geschwindigkeiten der Last, z.B. der Achse erfasst werden. Das Einwirken z.B. der Kräfte auf die Last, z.B. Achse und die damit hervorgerufenen sich zeitlich ändernden Positionen oder Geschwindigkeiten von Bauteilen an der Last, z.B. Achse, z.B. der Räder, definieren beispielsweise eine mögliche Zielbewegung, die mit dem Lastprüfstand nachgebildet wird.

Aufgrund der notwendigen Iteration zur Erreichung der Zielbewegung, mit welcher beispielsweise also die Einwirkung einer Straße auf eine Fahrzeugachse simuliert werden soll, ist die Lastsimulation aufgrund der für die Iteration benötigten Zeit nicht echtzeitfähig, d.h. sich zeitlich ändernde Sollwerte, z.B. von dem Weg bzw. der Position (z.B. eines Bauteils der Last) oder der Geschwindigkeit (z.B. eines Bauteils der Last) oder Kraft (zwischen Last und Prüfzylinder) oder Druck (im Zylinderraum) können dem Regelungssystem nicht in Echtzeit vorgegeben werden.

Damit erweisen sich Lastsimulationsprüfstände des Standes der Technik wenig flexibel, z.B. wenn Lasten geändert werden, da für neue Lasten sodann immer wieder neu ein iteratives Einlernen der vorzunehmenden zeitlichen Änderung der Sollwerte erfolgen muss. Darüber hinaus haben die bisherigen Lastprüfstände dieser Art den Nachteil, dass zum Zweck des Einlernens bereits eine konkrete Last auf dem Lastsimulationsprüfstand eingesetzt werden muss, die sodann bereits im Einlernprozess einem hohen Verschleiß unterliegt und im schlimmsten Fall sogar zerstört werden kann. So ergibt sich die Notwendigkeit zur Durchführung von Lastsimulationen mehrere Lasten gleicher Art vorzuhalten, um mit zumindest einer Last den Einlernprozess vorzunehmen und sodann nachfolgend mit zumindest einer anderen Last die Simulation durchzuführen.

Vor diesem Hintergrund ist es eine Aufgabe der Erfindung einen Lastsimulationsprüfstand und ein Verfahren zum Betrieb eines solchen bereitzustellen, mit denen der Aufwand zur Lastsimulation der Bewegung bzw. der Krafteinwirkung auf beliebige Lastobjekte, wie beispielsweise Fahrzeugachsen verringert werden kann und bevorzugt sogar die Möglichkeit erschließt, eine vorgegebene Zielbewegung der Last, wie beispielsweise das simulierte Befahren einer Straße mit der zu prüfenden Fahrzeugachse mit in Echtzeit vorgegebenen Sollwerten direkt d.h. bevorzugt ohne die Durchführung einer Iteration nachzubilden. Die vorzugebenden Sollwerte sind bevorzugt Werte von Druck (z.B. im Zylinderraum) oder Weg bzw. Position (z.B. eines Bauteils der Last) oder Geschwindigkeit (z.B. eines Bauteils der Last) oder Kraft (z.B. zwischen Prüfzylinder und Last).

Besonders bevorzugt soll ein Betriebsverfahren für Lastprüfstände die Möglichkeit eröffnen, anhand von Messdaten aus einem Fahrversuch, die beispielsweise mit Messsensoren z.B. für Kraft, Weg, Geschwindigkeit oder Beschleunigung aufgezeichnet wurden, beispielsweise beim Befahren einer Straße mit einer Fahrzeugachse, Anregungssignale bereitzustellen, insbesondere sich zeitlich ändernde Sollwerte für ein Druckregelungssystem eines Lastprüfstandes bereitzustellen, mit denen die gemessenen Messdaten in Echtzeit an einer Last erzeugt werden können, die auf dem erfindungsgemäßen Lastsimulationsprüfstand befestigt ist. Das Druckregelungssystem kann z.B. eine unterlagerte Regelung einer übergeordneten Regelungsstruktur sein, wie z.B einer Kaskadenregelung oder Zustandsregelung oder Mehrgrößenregelung sein. Um das Druckregelungsystem herum kann z.B. eine Wege-, Geschwindigkeiten- oder Kraftregelung angeordnet sein.

Diese Aufgabe wird bei einem Lastsimulationsprüfstand der eingangs genannten Art dadurch gelöst, dass der wenigstens eine Prüfzylinder, insbesondere jeder von mehreren vorgesehenen Prüfzylindern, wenigstens ein Kapazitätselement umfasst, mit dem die hydraulische Gesamtkapazität des wenigstens einen Zylinderraums einstellbar ist. Ein solches Kapazitätselement ist bevorzugt austauschbar und/oder in seiner hydraulischen Kapazität einstellbar.

Erfindungsgemäß wird mit einem Verfahren zum Betrieb eines Lastsimulationsprüfstandes für die mit dem wenigstens einen Prüfzylinder zu bewegende Last in Abhängigkeit einer vorgegebenen Druckregelungsbandbreite des Druckregelungssystems die Eigenfrequenz der Einheit aus Prüfzylinder und Last durch Änderung der Kapazität des Kapazitätselementes, z.B. durch Austausch oder bevorzugt durch Einstellung der Kapazität des einstellbaren Kapazitätselementes auf einen Wert kleiner als die Druckregelungsbandbreite eingestellt.

Die hydraulische Kapazität stellt die Nachgiebigkeit von Systemelementen dar, die zum Beispiel durch die Kompressibilität des Hydraulikfluids, die Elastizität der Rohrleitungen oder auch die Federwirkung eines Hydrospeichers entsteht. Aufgrund dieser Nachgiebigkeit entsteht bei einer Druckänderung eine Volumenänderung. Die hydraulische Kapazität ist definiert als das proportionale Verhältnis von Volumenstrom zu Druckänderung. Mit einem Kapazitätselement im Sinne der Erfindung lässt sich dieses Verhältnis für den wenigstens einen Prüfzylinder, bevorzugt für jeden von dessen Zylinderräumen ändern.

Eine Druckregelungsbandbreite des eingesetzten Druckregelungssystems ist im Wesentlichen systembedingt durch die eingesetzten Komponenten im Druckregelungssystem vorbestimmt. Beispielsweise kann ein Druckregelungssystem zum Einsatz bei einem Lastsimulationsprüfstand eine Druckregelungsbandbreite von 120 Hz aufweisen. Diese benannte Bandbreite ist als Beispiel zu verstehen. Grundsätzlich kann das Druckregelungssystem eine Druckregelungsbandbreite zwischen 0 Hz und einer oberen Grenzfrequenz aufweisen, sodass mit einem derartigen Druckregelungssystem beispielsweise typische Bewegungen von Fahrzeugachsen theoretisch nachgebildet werden können, insbesondere da sich zeigt, dass übliche Frequenzanteile in den Bewegungen, also den Wegen bzw. Positionen einer Last, z.B. von Fahrzeugachsen im Bereich von 0 bis 60 Hz liegen. Besonders für die Anwendung bei Lastsimulationsprüfständen zur Bewegung von Fahrzeugachsen sind somit Druckregelungsbandbreiten von 0 bis 100 Hz oder 0 bis 120 Hz ausreichend. Insbesondere wird als Bandbreite wegen der unteren Grenzfrequenz von 0 Hz im Wesentlichen der Wert der oberen Grenzfrequenz der Druckregelung verstanden.

Durch das erfindungsgemäß eingesetzte Kapazitätselement, das mit dem wenigstens einen Zylinderraums des Prüfzylinders in fluidischer Verbindung steht kann nun erzielt werden, dass insgesamt die hydraulische Gesamtkapazität des wenigstens einen Zylinderraumes einstellbar ist, sodass erfindungsgemäß im Betriebsverfahren durch eine Änderung der hydraulischen Gesamtkapazität eine Eigenfrequenz des belasteten Prüfzylinders unter dem Wert der oberen Grenzfrequenz des Druckregelungssystems erzielt werden kann, wodurch der druckgeregelte hydraulische Prüfzylinder wie ein bandbegrenztes ideales Druck- bzw. Kraftstellglied wirkt.

Eine Änderung der Gesamtkapazität kann z.B. dadurch erfolgen, dass ein vorhandenes Kapazitätselement gegen ein anderes mit einem anderen Kapazitätswert ausgetauscht wird. Bevorzugt wird die Änderung der Gesamtkapazität dadurch bewirkt, dass der Kapazitätswert des Kapazitätselementes selbst, insbesondere also ohne dieses austauschen zu müssen, wahlweise verschieden eingestellt wird. Es wird also in dieser bevorzugten Ausführung als Kapazitätselement ein solches eingesetzt, dessen eigener Kapazitätswert eingestellt werden kann, insbesondere zumindest innerhalb vorbestimmter Grenzen.

Durch die erfindungsgemäße Änderungsmöglichkeit der Gesamtkapazität des wenigstens einen Zylinderraumes wird eine höhere Regelgüte und Bandbreite des gesamten Lastsimulationsprüfstandes erzielt, sodass vorgegebene Zielbewegungen einer konkreten und an wenigstens einem Prüfzylinder angebrachten Last entweder mit weniger Iterationen nachgebildet werden können oder besonders bevorzugt ohne jegliche Iteration, d.h. somit in Echtzeit nachgebildet werden können. Durch zeitliche Änderung der Druckregelungssollwerte kann somit in der bevorzugten Ausführungsform unmittelbar ohne jegliche Iteration die vorgegebene Zielbewegung der Last erzielt werden, z. B. eine solche Zielbewegung die zuvor an einer realen Messstrecke messtechnisch erfasst wurde oder aber auch eine Zielbewegung, die vollständig synthetisch generiert wurde.

Beispielsweise kann es hier die Erfindung vorsehen, dass ein Lastprüfstand wenigstens ein Anregungssystem aus mehreren Prüfzylindern umfasst, z.B. wenigstens einen hydraulischen Hexapoden mit dementsprechend sechs hydraulischen Prüfzylindern umfasst, wobei jeder hydraulische Prüfzylinder gemäß der Erfindung eine einstellbare hydraulische Kapazität seines wenigstens einen Zylinderraums hat durch das Vorsehen eines austauschbaren oder in der Kapazität einstellbaren Kapazitätselements, das mit dem Hydraulikfluid des jeweiligen Zylinderraums in Verbindung steht.

Durch die Möglichkeit eine vorgegebene Zielbewegung in Echtzeit vorzugeben erschließt sich auch der Einsatz erfindungsgemäßer Lastprüfstände bei sogenannten Hardware-In-The-Loop-Techniken, beispielsweise bei der Entwicklung von Fahrwerkregelsystemen von Kraftfahrzeugen.

Erfindungsgemäß ist es bevorzugt, dass ein jeweiliger Prüfzylinder eines erfindungsgemäßen Lastsimulationsprüfstandes für jeden seiner Zylinderräume ein separates, bevorzugt austauschbares oder einstellbares Kapazitätselement umfasst. So kann für jeden Prüfzylinder separat das erfindungsgemäße Verfahrenskriterium erreicht werden, nämlich dass nach Änderung / Einstellung des oder der Kapazitätselemente die Eigenfrequenz der Einheit aus Last und dem wenigstens einen Prüfzylinder kleiner als die Druckregelungsbandbreite des Druckregelungssystems ist.

Allgemein kann die Erfindung vorsehen, dass das wenigstens eine Kapazitätselement, bevorzugt jedes der Kapazitätselemente eines jeweiligen Prüfzylinders, extern zum jeweiligen Prüfzylinder und in fluidischer, insbesondere direkter fluidischer Verbindung zum Zylinderraum angeordnet ist.

Dabei wird bevorzugt unter einer direkten fluidischen Verbindung verstanden, dass ein Druckabfall in der Verbindung zwischen dem Zylinderraum und dem Kapazitätselement bei der maximalen Frequenz und der zugehörigen Amplitude, mit der der Prüfzylinder betrieben werden kann/soll, nicht mehr als 10 % vom aufgeprägten Betriebsdruck beträgt.

Ein externes Kapazitätselement kann in einer bevorzugten Ausführung der Erfindung z.B. ausgebildet sein als ein Membranausdehnungsgefäß, dessen Membran an einer Seite durch das Hydraulikfluid des Zylinderraumes beaufschlagt ist und dessen andere Seite durch ein Fluid, wie beispielsweise ein Gas beaufschlagt ist. Zur Erzielung einer Einstellbarkeit des Kapazitätswertes des Membranausdehnungsgefäßes kann bevorzugt dessen Druck an der genannten anderen Seite der Membran einstellbar sein. So kann durch Änderung des Druckes im Fluid auf der dem Hydraulikfluid abgewandten Seite der Membran oder alternativ durch einen Austausch gegen ein Gefäß mit anderer Kapazität die Kapazität dieses Membranausdehnungsgefäßes und hierdurch die Eigenfrequenz des mit der Last beaufschlagten Prüfzylinders individuell eingestellt werden, insbesondere um das eingangs genannte verfahrensgemäße Ziel einer Eigenfrequenz unterhalb der Druckregelungsgrenzfrequenz, z.B. kleiner als 50 oder 60 Hz zu erreichen.

Ein externes Kapazitätselement kann beispielsweise ebenso ausgebildet sein als eine Dehnschlauchanordnung, z.B. eine austauschbare und besonders bevorzugt eine, bei der zur Einstellung der Kapazität die wirksame Gesamtschlauchlänge einstellbar ist. Hierfür können beispielsweise mehrere Schlauchabschnitte von unterschiedlicher Länge schaltungstechnisch parallel oder seriell angeordnet sein und über jeweilige Ventile in die Wirkung der Dehnschlauchanordnung wahlweise integriert oder aus dieser ausgeschlossen werden. So können die verschiedenen Einzelschlauchlängen durch wahlweise Zusammenschaltung zu verschiedenen Gesamtschlauchlängen addiert und hierdurch wiederum die Eigenfrequenz des mit der Last beaufschlagten wenigstens einen Prüfzylinders geändert werden.

Ebenso besteht die Möglichkeit ein Kapazitätselement auszubilden durch einen Körper aus einem elastomeren Material, bevorzugt durch einen mit einem Hohlraum versehenen und darin mit einem Fluid, bevorzugt gasförmigen Fluid gefüllten Körper aus einem elastomeren Material, dessen Fluiddruck im Hohlraum des elastomeren Körpers einstellbar ist.

Allgemein und besonders bei einer externen Anordnung eines weiter bevorzugt einstellbaren Kapazitätselementes an dem wenigstens einen Zylinderraum eines jeweiligen Prüfzylinders kann eine einfache Nachrüstung bestehender Prüfzylinder von Lastsimulationsprüfständen vorgenommen werden.

Die Erfindung kann ebenso vorsehen, dass das wenigstens eine Kapazitätselement, bevorzugt jedes der Kapazitätselemente im Inneren des Zylinderraums des jeweiligen Prüfzylinders angeordnet und von dem Hydraulikfluid des Zylinderraums kontaktiert ist. Insbesondere bei dieser Ausführungsform kann es vorgesehen sein, dass das Kapazitätselement ausgebildet ist als ein nachgiebiger, beispielsweise aus einem elastomeren Material ausgebildeter, bevorzugt hohler fluidgefüllter Körper, bevorzugt wobei der Fluiddruck im Hohlraum des Körpers einstellbar ist. Die Einstellbarkeit des Fluiddruckes im Hohlraum dieses benannten Körpers ist bevorzugter Weise trotz dessen Anordnung im Inneren des Zylinderraumes von extern änderbar, wofür z.B. eine entsprechende Leitung aus dem Zylinderraum herausgeführt sein kann.

Auch bei einer internen Anordnung des Kapazitätselementes kann dieses beispielsweise auch als Membranausdehnungsgefäß ausgebildet sein, dessen Membran an einer Seite durch das Hydraulikfluid des Zylinderraums beaufschlagt ist und dessen andere Seite durch ein Fluid, insbesondere ein Gas beaufschlagt ist, bevorzugt dessen Druck zur Änderung des Kapazitätswertes einstellbar ist.

Grundsätzlich kann es auch bei interner Anordnung des Kapazitätselementes vorgesehen sein, bestehende Prüfzylinder nachträglich mit einem solchen Kapazitätselement auszustatten.

Ein solches Kapazitätselement kann bei internem Einsatz im Prüfzylinder z. B. auch einen Anschlag für den Kolben des Prüfzylinders, z. B. zur Begrenzung von dessen Bewegungsweite realisiert sein. Insbesondere können beispielsweise bereits in einem Prüfzylinder vorhandene Anschlagelemente durch ein erfindungsgemäßes Kapazitätselement ausgetauscht werden, bevorzugt durch ein in seiner hydraulischen Kapazität einstellbares Anschlagelement getauscht werden.

Die Erfindung benennt es als wesentlich, die Eigenfrequenz der Einheit aus dem wenigstens einen Prüfzylinder und der Last kleiner einzustellen als die Druckregelungsbandbreite des Druckregelungssystems. Bevorzugt kann es hier die Erfindung vorsehen, die Eigenfrequenz so zu wählen, dass diese einem Wert von 30% bis 70%, bevorzugt 40% bis 60% und weiter bevorzugt 45% bis 55% der Druckregelungsbandbreite des Druckregelungssystems entspricht.

Durch die Einstellung der Kapazität auf die erfindungsgemäß vorgesehenen Eigenfrequenzwerte erschließt die Erfindung die Möglichkeit das Verfahren zum Betrieb eines Lastsimulationsprüfstandes so auszuführen, dass Zielfluiddrucksollwerte in Abhängigkeit einer vorgegebenen Zielbewegung, die z. B. zuvor messtechnisch erfasst wurde oder synthetisch generiert wird direkt, insbesondere in Echtzeit, dem Druckregelungssystem vorzugeben. Es können so Zielfluiddrucksollwerte in Echtzeit vorgegeben werden, ohne dass die Notwendigkeit besteht, diese zuvor in Abhängigkeit der messtechnischen Erfassung der Bewegung der Last durch eine Iteration an die vorgegebene Zielbewegung anzunähern, wie es im bisherigen Stand der Technik bekannt ist.

Mit erfindungsgemäßen Lastsimulationsprüfständen und dem Betriebsverfahren können Lasten somit effizienter beaufschlagt werden, insbesondere ohne Berücksichtigung des zeitlichen Aspektes einer Iteration und ohne deren gegebenenfalls bewirkte Vorschädigung einer Last.

Die Erfindung wird anhand der nachfolgenden Figuren näher erläutert.

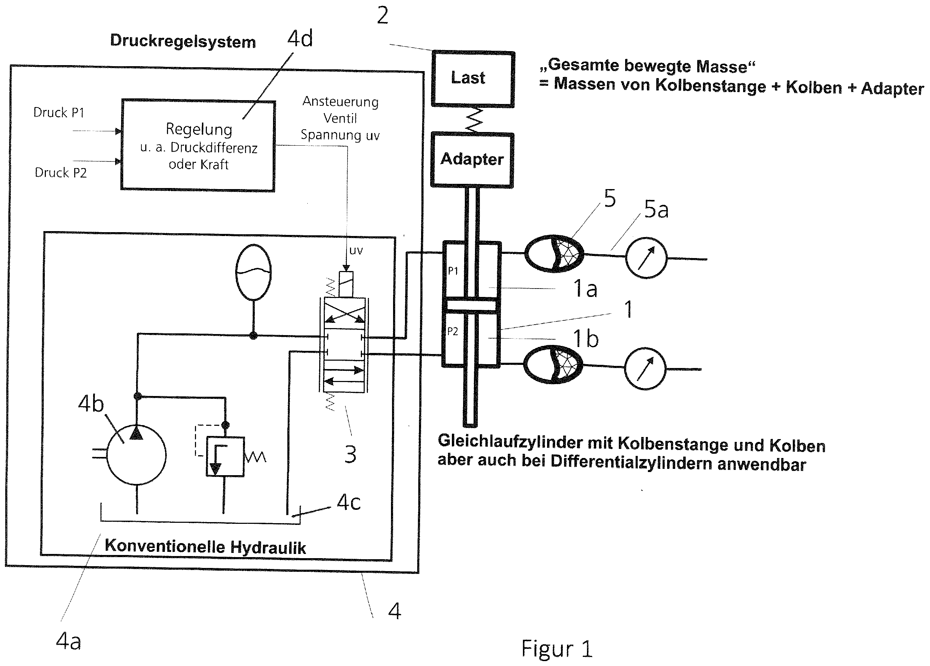

Die Figur 1 zeigt in einer Übersichtsdarstellung einen schematischen Lastsimulationsprüfstand, der hier, insbesondere zum Zwecke der Vereinfachung, lediglich einen Prüfzylinder 1 aufweist oder zeigt. In der tatsächlichen Ausbildung wird es hingegen bevorzugt vorgesehen sein, den Lastsimulationsprüfstand mit mehreren solcher Prüfzylinder 1 zu betreiben, z. B. mit Antriebseinheiten zur Bewegung einer Last 2, die in sich mehrere Prüfzylinder 1 umfassen, wie dies z. B. bei einem hydraulischen Hexapoden der Fall ist. In diesem Beispiel ist der Prüfzylinder 1 als Gleichlaufzylinder ausgebildet, wobei dessen Zylinderräume 1a und 1b durch ein ansteuerbares Ventil 3 eines Druckregelungssystems 4 durch Ansteuerung des Ventils 3 zeitlich änderbar mit Druck aus einem Hydrauliksystem 4a des Druckregelungssystems beaufschlagt werden. Ebenso kann z.B. ein Differentialzylinder zum Einsatz kommen.

Die Figur 1 visualisiert, dass die Last 2 hier mittels eines Adapters an der Kolbenstange des Gleichlaufzylinders befestigt ist, wodurch sich die gesamte bewegte Masse ergibt, durch die Summe der Massen von Kolbenstange, Kolben, Adapter und der daran befestigten Last 2.

Erfindungsgemäß ist es nun vorgesehen hier mit einem jeweiligen externen Kapazitätselement 5 die gesamte hydraulische Kapazität jedes der beiden Zylinderräume 1a und 1b variabel einstellbar zu gestalten. In diesem Beispiel ist das hydraulische Kapazitätselement 5 als Membranausdehnungsgefäß ausgebildet, bevorzugt dessen Druck auf der dem Hydraulikfluid abgewandten Seite der Membran durch eine Leitung 5a einstellbar ist. Die Membran trennt hier somit zwei Räume, die abgesehen von der Membran durch starre Wände umgrenzt sind. Durch die Einstellbarkeit des Fluiddruckes entfällt die Notwendigkeit, zur Änderung des Kapazitätswertes das Membranausdehnungsgefäß gegen ein anderes mit anderem Kapazitätswert zu tauschen, was die Erfindung aber ebenso umfasst.

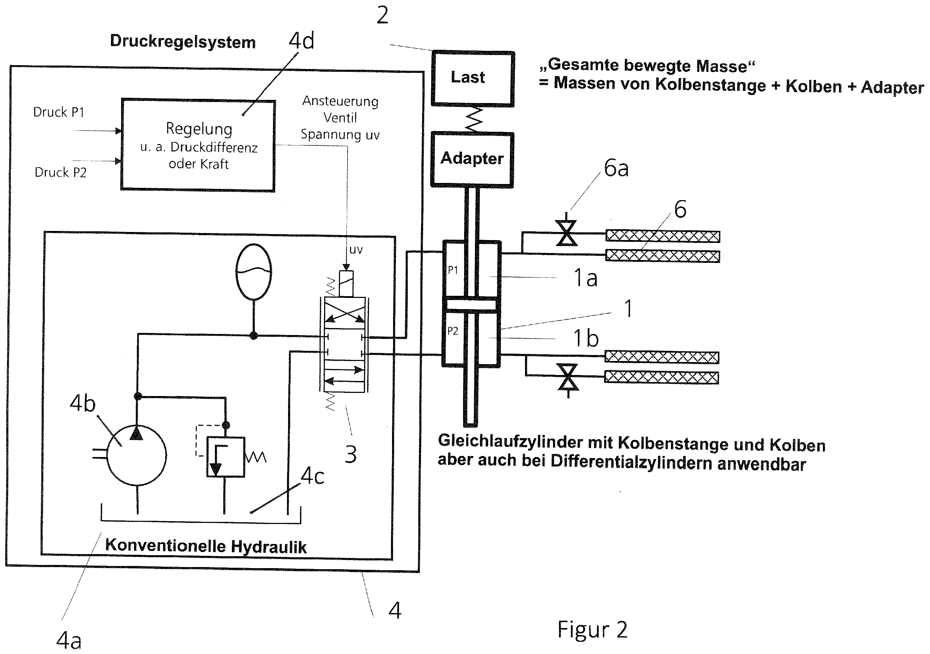

Gemäß Figur 2 kann es die Erfindung auch vorsehen, als Alternative zu dem Kapazitätselement 5 der Figur 1 ein Kapazitätselement 6 vorzusehen, das konstruktiv als Dehnschlauch, bevorzugt als Anordnung von wenigstens zwei Dehnschläuchen ausgebildet sein kann, die durch Ventile 6a wahlweise in ihrer Wirkung zusammengeschaltet werden können, um so die effektive Gesamtlänge der Dehnschlauchanordnung wahlweise einzustellen.

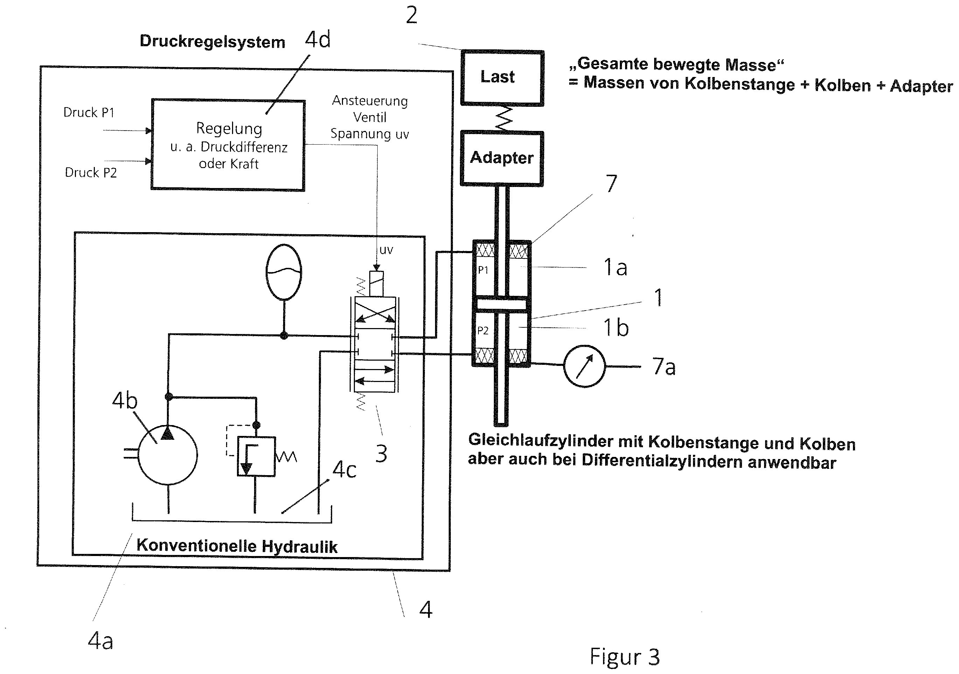

Als weitere Alternative können gemäß Figur 3 innerhalb eines jeweiligen Zylinderraumes, z. B. an den Endanschlagspositionen des Kolbens elastomere Elemente 7 vorgesehen sein, die im direkten Fluidkontakt mit dem Fluid innerhalb des Zylinderraumes stehen, bevorzugt die weiterhin einen mit einem Fluid, bevorzugt gasförmigen Fluid gefüllten Hohlraum aufweisen, dessen Druck über die Leitung 7a änderbar ist.

Die Figuren 1 bis 3 zeigen jeweils im Wesentlichen dasselbe Gesamtsystem, wobei lediglich die Kapazitätselemente 5, 6, 7 unterschiedlich in der Art und bevorzugt jeweils in der Kapazität einstellbar ausgebildet sind. Statt der alternativen Verwendung dieser Kapazitätselemente können diese auch kumulativ zum Einsatz kommen. Es sind also auch mehrere artverschiedene Kapazitätselemente pro Zylinderraum möglich.

Für alle Möglichkeiten der realisierbaren, bevorzugt einstellbaren Kapazitätselemente ist es vorgesehen, dass diese kontinuierlich an den jeweiligen Zylinderräumen 1a und 1b angeschlossen sind und/oder kontinuierlich mit dem Fluid des jeweiligen Zylinderraumes 1a, 1b in Verbindung stehen. Somit ist es für die Erfindung wesentlich, dass ein jeweiliges, bevorzugt in der Kapazität einstellbares Kapazitätselement nicht durch das Ventil 3 vom Zylinder trennbar ist, welches im Druckregelungssystem zur zeitlich änderbaren Druckbeaufschlagung der Zylinderräume vorgesehen ist.

Das Druckregelungssystem umfasst hier ein umsteuerbares Ventil 3, mit dem das Hydraulikfluid, das mittels einer Pumpe 4b einem Tank 4c entnommen und unter Druck gesetzt wird, je nach Position in einen der beiden Zylinderräume 1a oder 1b geleitet und gleichzeitig von dem jeweils anderen Zylinderraum zum Tank 4c zurückgeführt wird.

Die Steuerung des Ventil erfolgt durch eine Regelelektronik 4d, welche mittels Drucksensoren den Druck P1 bzw P2 in den Zylinderräumen 1a bzw. 1b erfasst und mit diesen Druck als Ist-Wert mit dem Soll-Wert vergleicht und hieraus die Ansteuerung für das Ventil 3 bildet.

Diese beschriebene Druckregelung kann ein Teil einer übergeordneten weiteren Regelung sein, die hier nicht visualisiert ist und die eine weitere Größe regelt, z.B. den Weg bzw. die Position oder die Geschwindigkeit der Last.

Durch die Änderung der hydraulischen Kapazität des jeweiligen Kapazitätselementes 5, 6 oder 7 durch Austausch des Kapazitätselementes gegen solche anderer Kapazitätswerte oder durch die Einstellung seiner eigenen Kapazität kann nun die Eigenfrequenz der Gesamteinheit aus Prüfzylinder und daran angeordneter Last 2 für jeden Zylinderraum 1a, 1b separat auf einen Wert kleiner als die Regelungsbandbreite des Druckregelungssystems 4 eingestellt werden, insbesondere die systembedingt vorgegeben ist.

So kann die Druckregelungsbandbreite beispielsweise eine Systemkonstante sein, die sich durch die in dem Druckregelungssystem insgesamt eingesetzten Einheiten ergibt. In Kenntnis dieser Druckregelungsbandbreite und insbesondere somit der oberen Grenzfrequenz die mit diesem Druckregelungssystem erreicht werden kann, kann nun die Eigenfrequenz der Einheit aus Last und dem wenigstens einen Prüfzylinder so gewählt werden, dass die Eigenfrequenz kleiner ist als die obere Grenzfrequenz und bevorzugt im Bereich von 30 % bis 70 % weiter bevorzugt 40 % bis 60 % und besonders bevorzugt 45 % bis 55 % der Druckregelungsbandbreite bzw. der oberen Grenzfrequenz liegt.

## Patentansprüche

1. Lastsimulationsprüfstand mit wenigstens einem hydraulischen Prüfzylinder (1), der wenigstens einen mit Hydraulikfluid beaufschlagbaren Zylinderraum (1a, 1b), bevorzugt zwei mit Hydraulikfluid beaufschlagbare und gegeneinander arbeitende Zylinderräume (1a, 1b) umfasst, wobei mittels eines Druckregelungssystems (4) durch eine zeitlich änderbare Regelung des Fluiddruckes in dem wenigstens einen Zylinderraum (1a, 1b) des wenigstens einen Prüfzylinders (1) die Last bewegbar ist, **dadurch gekennzeichnet, dass** der wenigstens eine Prüfzylinder (1), insbesondere jeder von mehreren vorgesehenen Prüfzylindern (1), wenigstens ein Kapazitätselement (5, 6, 7) umfasst, bevorzugt ein austauschbares oder in der hydraulischen Kapazität einstellbares Kapazitätselement (5, 6, 7) umfasst, mit dem die hydraulische Gesamtkapazität des wenigstens einen Zylinderraumes (1a, 1b) so einstellbar ist, dass die Eigenfrequenz der Einheit aus dem wenigstens einen Prüfzylinder (1) und Last kleiner als die Druckregelungsbandbreite des Druckregelungssystems (4) ist.

2. Lastsimulationsprüfstand nach Anspruch 1, **dadurch gekennzeichnet, dass** ein jeweiliger Prüfzylinder (1) für jeden seiner Zylinderräume (1a, 1b) ein separates, bevorzugt einstellbares Kapazitätselement (5, 6, 7) umfasst.

3. Lastsimulationsprüfstand nach einem der vorherigen Ansprüche, **dadurch gekennzeichnet, dass** das wenigstens eine Kapazitätselement (5, 6), bevorzugt jedes der Kapazitätselemente (5, 6) extern zum jeweiligen Prüfzylinder (1) und in fluidischer, insbesondere direkter fluidischer Verbindung zum Zylinderraum (1a, 1b) angeordnet ist.

4. Lastsimulationsprüfstand nach Anspruch 3, **dadurch gekennzeichnet, dass** das wenigstens eine externe Kapazitätselement (5, 6) des wenigstens einen Prüfzylinders (1) ausgebildet ist als:
a. ein Membranausdehnungsgefäß (5), dessen Membran an einer Seite durch das Hydraulikfluid des Zylinderraumes (1a, 1b)beaufschlagt ist und dessen andere Seite durch ein Fluid, insbesondere Gas beaufschlagt ist, bevorzugt dessen Druck zur Änderung des Kapazitätswertes einstellbar ist, oder
b. eine Dehnschlauchanordnung (6), bevorzugt deren wirksame Gesamtschlauchlänge einstellbar ist, oder
c. eine nachgiebige Anordnung, insbesondere ein aus einem elastomeren Material ausgebildeter Körper, bevorzugt hohler fluidgefüllter elastomerer Körper, bevorzugt wobei der Fluiddruck im Hohlraum des Körpers einstellbar ist.

5. Lastsimulationsprüfstand nach einem der vorherigen Ansprüche 1 oder 2, **dadurch gekennzeichnet, dass** das wenigstens ein Kapazitätselement (7), bevorzugt jedes der Kapazitätselemente (7) im Zylinderraum des jeweiligen Prüfzylinders (1) angeordnet und von dem Hydraulikfluid des Zylinderraumes (1a, 1b) kontaktiert ist.

6. Lastsimulationsprüfstand nach Anspruch 5, **dadurch gekennzeichnet, dass** das wenigstens eine interne Kapazitätselement (7) des wenigstens einen Prüfzylinders (1) ausgebildet ist als:
a. ein nachgiebiger Körper, insbesondere aus einem elastomeren Material ausgebildeter Körper, bevorzugt hohler fluidgefüllter Körper (7), insbesondere wobei der Fluiddruck im Hohlraum des Körpers (7) einstellbar ist, oder
b. ein Membranausdehnungsgefäß, dessen Membran an einer Seite durch das Hydraulikfluid des Zylinderraumes beaufschlagt ist und dessen andere Seite durch ein Fluid, insbesondere Gas beaufschlagt ist, bevorzugt dessen Druck zur Änderung des Kapazitätswertes einstellbar ist.

7. Verfahren zum Betrieb eines Lastsimulationsprüfstandes mit wenigstens einem Prüfzylinder (1) gemäß einem der vorherigen Ansprüche, wobei der wenigstens eine Prüfzylinder (1) mit einer zu bewegenden Last verbunden wird und wobei mittels eines Druckregelungssystems (4) durch eine zeitlich änderbare Regelung des Fluiddruckes in dem wenigstens einen Zylinderraum (1a, 1b) des wenigstens einen Prüfzylinders (1) die Last bewegt wird, **dadurch gekennzeichnet, dass** für die mit dem wenigstens einen Prüfzylinder (1) zu bewegende Last in Abhängigkeit der Druckregelungsbandbreite des Druckregelungssystems (4) die Eigenfrequenz der Einheit aus dem wenigstens einen Prüfzylinder (1) und Last durch Änderung der Kapazität des Kapazitätselementes (5, 6, 7), bevorzugt Einstellung der Kapazität des einstellbaren Kapazitätselementes (5, 6, 7) auf einen Wert kleiner als die Druckregelungsbandbreite eingestellt wird.

8. Verfahren nach Anspruch 7, **dadurch gekennzeichnet, dass** die Eigenfrequenz auf einen Wert von 30% bis 70%, bevorzugt 40% bis 60%, weiter bevorzugt 45% bis 55% der Druckregelungsbandbreite eingestellt wird.

9. Verfahren nach einem der vorherigen Ansprüche 7 oder 8, **dadurch gekennzeichnet, dass** Ziel-Fluiddruck-Sollwerte in Abhängigkeit einer vorgegebenen Zielbewegung der Last direkt, insbesondere in Echtzeit, dem Druckregelungssystem (4) vorgegeben werden, insbesondere ohne die Ziel-Fluiddruck-Sollwerte zuvor in Abhängigkeit der messtechnischen Erfassung der Bewegung der Last durch Iteration an die vorgegebene Zielbewegung anzunähern.

## Claims

1. Load simulation test stand having at least one hydraulic test cylinder (1), which comprises at least one cylinder chamber (1a, 1b) that can be acted on with hydraulic fluid, preferably two cylinder chambers (1a, 1b) that can be acted on with hydraulic fluid and work against each other, wherein the load can be moved by means of a pressure control system (4) by time-changeable control of the fluid pressure in the at least one cylinder chamber (1a, 1b) of the at least one test cylinder (1), **characterized in that** the at least one test cylinder (1), in particular each of a plurality of test cylinders (1) provided, comprises at least one capacity element (5, 6, 7), preferably comprises a capacity element (5, 6, 7) that is exchangeable or of which the hydraulic capacity can be adjusted, with which the overall hydraulic capacity of the at least one cylinder chamber (1a, 1b) can be adjusted such that the resonant frequency of the unit comprising the at least one test cylinder (1) and the load is lower than the pressure control bandwidth of the pressure control system (4).

2. Load simulation test stand according to Claim 1, **characterized in that** a respective test cylinder (1) comprises a separate, preferably adjustable, capacity element (5, 6, 7) for each of its cylinder chambers (1a, 1b).

3. Load simulation test stand according to one of the preceding claims, **characterized in that** the at least one capacity element (5, 6), preferably each of the capacity elements (5, 6), is arranged externally relative to the respective test cylinder (1) and has a fluidic, in particular directly fluidic, connection to the cylinder chamber (1a, 1b).

4. Load simulation test stand according to Claim 3, **characterized in that** the at least one external capacity element (5, 6) of the at least one test cylinder (1) is designed as:
a. a diaphragm expansion vessel (5), with one side of the diaphragm acted on by the hydraulic fluid of the cylinder chamber (1a, 1b) and the other side acted on by a fluid, in particular gas, preferably of which the pressure is adjustable to change the capacity value, or
b. an expansion hose assembly (6), preferably of which the effective overall hose length is adjustable, or
c. a resilient assembly, in particular a body formed of an elastomeric material, preferably a hollow fluid-filled elastomeric body, preferably wherein the fluid pressure in the cavity of the body is adjustable.

5. Load simulation test stand according to either of the preceding Claims 1 and 2, **characterized in that** the at least one capacity element (7), preferably each of the capacity elements (7), is arranged in the cylinder chamber of the respective test cylinder (1) and is contacted by the hydraulic fluid of the cylinder chamber (1a, 1b).

6. Load simulation test stand according to Claim 5, **characterized in that** the at least one internal capacity element (7) of the at least one test cylinder (1) is designed as:
a. a resilient body, in particular a body formed of an elastomeric material, preferably a hollow fluid-filled body (7), in particular wherein the fluid pressure in the cavity of the body (7) is adjustable, or
b. a diaphragm expansion vessel (5), with one side of the diaphragm acted on by the hydraulic fluid of the cylinder chamber and the other side acted on by a fluid, in particular gas, preferably of which the pressure is adjustable to change the capacity value.

7. Method for operating a load simulation test stand having at least one test cylinder (1) according to one of the preceding claims, wherein the at least one test cylinder (1) is connected to a load to be moved, and wherein the load is moved by means of a pressure control system (4) by time-changeable control of the fluid pressure in the at least one cylinder chamber (1a, 1b) of the at least one test cylinder (1), **characterized in that** for the load to be moved by the at least one test cylinder (1), depending on the pressure control bandwidth of the pressure control system (4), the resonant frequency of the unit comprising the at least one test cylinder (1) and the load is adjusted by changing the capacity of the capacity element (5, 6, 7), preferably adjusting the capacity of the adjustable capacity element (5, 6, 7) to a value lower than the pressure control bandwidth.

8. Method according to Claim 7, **characterized in that** the resonant frequency is adjusted to a value of 30% to 70%, preferably 40% to 60%, more preferably 45% to 55%, of the pressure control bandwidth.

9. Method according to either of the preceding Claims 7 and 8, **characterized in that** target fluid pressure set points are predefined to the pressure control system (4) directly, in particular in real time, depending on a predefined target movement of the load, in particular without previously bringing the target fluid pressure set points closer to the predefined target movement by iteration as a function of the detection of the movement of the load by measurement.

## Revendications

1. Banc d'essai à simulation de charge, comprenant au moins un vérin d'essai hydraulique (1) qui comprend au moins une chambre de vérin (1a, 1b) pouvant être soumise à un fluide hydraulique, de préférence deux chambres de vérin (1a, 1b) pouvant être soumises à un fluide hydraulique et fonctionnant en opposition, dans lequel un système de régulation de pression (4) permet de déplacer la charge par une régulation variable dans le temps de la pression de fluide dans ladite au moins une chambre de pression de l'au moins un vérin d'essai (1),
**caractérisé en ce que** ledit au moins un vérin d'essai (1), en particulier chacun de plusieurs vérins d'essai (1) prévus, comprend au moins un élément de capacité (5, 6, 7), de préférence un élément de capacité (5, 6, 7) échangeable ou réglable au niveau de la capacité hydraulique qui permet de régler la capacité hydraulique totale de ladite au moins une chambre de vérin (1a, 1b) de telle sorte que la fréquence de résonance de l'unité composée de l'au moins un vérin d'essai (1) et de la charge est inférieure à la bande passante de régulation de pression du système de régulation de pression (4).

2. Banc d'essai à simulation de charge selon la revendication 1, **caractérisé en ce qu'**un vérin d'essai (1) respectif comprend pour chacune de ses chambres de vérin (1a, 1b) un élément de capacité (5, 6, 7) séparé, de préférence réglable.

3. Banc d'essai à simulation de charge selon l'une quelconque des revendications précédentes, **caractérisé en ce que** ledit au moins un élément de capacité (5, 6), de préférence chacun des éléments de capacité (5, 6), est disposé à l'extérieur du vérin d'essai (1) respectif et en communication fluidique, en particulier en communication fluidique directe, avec la chambre de vérin (1a, 1b).

4. Banc d'essai à simulation de charge selon la revendication 3, **caractérisé en ce que** ledit au moins un élément de capacité extérieur (5, 6) de l'au moins un vérin d'essai (1) est réalisé sous la forme :
a) d'un vase d'expansion à membrane (5) dont la membrane est soumise d'un côté au fluide hydraulique de la chambre de vérin (1a, 1b) et dont l'autre côté est soumis à un fluide, en particulier à un gaz, dont la pression est de préférence réglable pour faire varier la valeur de capacité, ou
b) d'un agencement de tuyau souple d'expansion (6) dont la longueur de tuyau souple effective totale est de préférence réglable, ou
c) d'un agencement souple, en particulier d'un corps réalisé à partir d'un matériau élastomère, de préférence d'un corps élastomère creux, rempli de fluide, dans lequel la pression de fluide dans la cavité du corps est de préférence réglable.

5. Banc d'essai à simulation de charge selon l'une quelconque des revendications précédentes 1 ou 2, **caractérisé en ce que** ledit au moins un élément de capacité (7), de préférence chacun des éléments de capacité (7), est disposé dans la chambre de vérin du vérin d'essai (1) respectif et entre en contact avec le fluide hydraulique de la chambre de vérin (1a, 1b).

6. Banc d'essai à simulation de charge selon la revendication 5, **caractérisé en ce que** ledit au moins un élément de capacité (7) interne de l'au moins un vérin d'essai (1) est réalisé sous la forme :
a) d'un corps souple, en particulier d'un corps réalisé à partir d'un matériau élastomère, de préférence d'un corps creux rempli de fluide (7), dans lequel la pression de fluide dans la cavité du corps (7) est de préférence réglable, ou
b) d'un vase d'expansion à membrane dont la membrane est d'un côté soumise au fluide hydraulique de la chambre de vérin, et dont l'autre côté est soumis à un fluide, de préférence à un gaz, dont la pression est de préférence réglable pour faire varier la valeur de capacité.

7. Procédé permettant de faire fonctionner un banc d'essai à simulation de charge comprenant au moins un vérin d'essai (1) selon l'une quelconque des revendications précédentes, dans lequel ledit au moins un vérin d'essai (1) est relié à une charge à déplacer, et dans lequel un système de régulation de pression (4) permet de déplacer la charge par une régulation variable dans le temps de la pression de fluide dans ladite au moins une chambre de pression (1a, 1b) de l'au moins un vérin d'essai (1),
**caractérisé en ce que** pour la charge à déplacer par ledit au moins un vérin d'essai (1), en fonction de la bande passante de régulation de pression du système de régulation de pression (4), la fréquence de résonance de l'unité composée de l'au moins un vérin d'essai (1) et de la charge est réglée par la variation de la capacité de l'élément de capacité (5, 6, 7), de préférence par le réglage de la capacité de l'élément de capacité (5, 6, 7) réglable, à une valeur inférieure à la bande passante de régulation de pression.

8. Procédé selon la revendication 7, **caractérisé en ce que** la fréquence de résonance est réglée sur une valeur de 30 % à 70 %, de préférence de 40 % à 60 %, plus préférablement de 45 % à 55 %, de la bande passante de régulation de pression.

9. Procédé selon l'une quelconque des revendications précédentes 7 ou 8, **caractérisé en ce que** des valeurs de consigne de pression de fluide cible sont spécifiées directement, en particulier en temps réel, pour le système de régulation de pression (4) en fonction d'un mouvement cible spécifié de la charge, en particulier sans rapprocher auparavant les valeurs de consigne de pression de fluide cible par itération du mouvement cible spécifié en fonction de la détection par une technique de mesure du mouvement de la charge.
